# EUROPEAN PATENT APPLICATION

(11) **EP 3 950 798 A1**
(43) Date of publication of application: **09.02.2022**
(21) Application number: 21189893.7
(22) Date of filing: 05.08.2021
(51) Int. Cl.: C08J 11/06, C08J 3/18, C08J 5/18, B29C 43/22, B29D 7/01

(54) **CIRCULAR SHEET AND METHOD FOR MANUFACTURING A CIRCULAR SHEET**

(30) Priority: 05.08.2020 NL 2026224
(71) Applicant: Probo Sign B.V., 9101 PE Dokkum (NL)
(72) Inventor: Werkman, Tjalling, 9101 PE DOKKUM (NL)
(74) Representative: Arnold & Siedsma

(57) **Abstract**

The invention relates to a method for manufacturing a circular sheet, screen, and method for displaying picture/image and/or text. The method for manufacturing a circular sheet comprises the steps of:
- providing flakes of circular waste material comprising polyvinyl chloride, polyester, plasticiser, and stabiliser to a press;
- compressing the flakes of waste material; and
- during compressing, heating the flakes of waste material.

## Description

The present invention relates to a circular sheet, banner, sheet, method for manufacturing a circular sheet, method for manufacturing a banner, and method for displaying picture/image and/or text. For example, the circular sheet is manufactured from a waste stream which is produced by the manufacturing of banners and/or sheets and/or produced of discarded sheets.

It is known from practice that sheets, such as sheets for banners, are manufactured from virgin material. It is noted that in this respect, virgin or virgin material or virgin raw material refers to material that has not been previously used, or subjected to processing other than for its original production. Conventional sheets include sheets comprising polyvinyl chloride. It is also known from practice that the sheets, after use, are combusted or are recycled to low quality products.

A disadvantage of combusting and/or recycling to low quality materials is that is has a significant negative impact on the environment.

Therefore, there is a need for a material manufactured by a method that reduces the environmental footprint.

An objective of the present invention is to obviate or at least reduce the aforementioned problem and provide a method to manufacture material with a reduced environmental footprint.

This objective is achieved with the method for manufacturing a circular sheet, comprising the steps of:
- providing flakes of circular waste material comprising polyvinyl chloride, polyester, plasticiser, and stabiliser to a press;
- compressing the flakes of waste material; and
- during compressing, heating the flakes of waste material.

Circular or circularity refers to a system of closed loops in which raw materials, components, and products lose as little of their value as possible. In other words, the system aims at eliminating waste and continuous use of resources.

It is noted that the term environmental footprint and carbon footprint are used interchangeably in the application.

The method according to the invention for manufacturing the circular sheet comprises circular waste material. In a preferred embodiment according to the invention the circular sheet is substantially completely made of circular waste material.

The circular waste material, by virtue of its circular nature, enables the reuse of products and/or components to provide (new) high quality raw materials. This high quality material may in turn be used to provide high quality products, such as circular sheets.

According to the invention a substantial amount of polyvinyl chloride, polyester, plasticiser, and stabiliser originates from flakes of circular waste material. The flakes of circular material may be obtained by shredded waste material, wherein the size of the flakes may vary depending on the use of the flakes.

The flake according to the invention refers to a small, thin piece of waste material comprising polyvinyl chloride and polyester. Preferably, such flakes originate from waste material that comes from the production of sheets of virgin material and/or originate from used banner material comprising polyvinyl chloride and polyester. Preferably the circular sheet fully originates from flakes of circular waste material comprising polyvinyl chloride and polyester.

The circular sheet according to the invention comprises plasticisers. The plasticiser is provided to the circular sheet to provide flexibility. Therefore, the circular sheet is flexible.

Flexible refers to a product of sheet, such as a circular sheet according to the invention, which is able to bent or be bent easily without breaking, cracking, and/or creasing, wherein the flexibility is defined as the percentage the circular sheet may bend before it breaks and/or cracks, and wherein 0% flexible is a plate which in inflexible, and 100% flexible is folded. The flexibility values in between refer to a circular sheet which may be configured in an arched shape depending on the flexibility of the sheet. The method according to the invention for manufacturing a circular sheet provides a sheet whit at least 10% flexibility, preferably at least 20% flexibility, more preferably at least 30% flexibility. It is noted that a sheet according to the invention having a flexibility of up to 35% flexibility is also referred to as a plate or plate material formed.

The circular sheet material according to the invention further comprises stabiliser. The stabiliser is provided to the circular sheet to prevent degradation of the material the circular sheet is made of. Degradation may occur due to environmental influences, such as ultra violet light, rain, heat, and/or use of the circular sheet.

Another advantage of flakes of circular waste material comprising plasticiser and/or stabiliser is that a circular sheet with the desired properties is achieved. For example, the life-time of the circular sheet is prolonged due to the stabiliser and/or flexibility and possibility to form various shapes due to the plasticiser.

An advantage of the method for manufacturing a circular sheet according to the invention is that the amount of waste material is reduced. As a result the environmental footprint is reduced. This may even be as much as reducing the amount of waste material to substantially zero.

Furthermore, the method for manufacturing a circular sheet according to the invention reduces the use of raw material/virgin material. Therefore, less valuable (virgin) resource is used. In addition, it (further) reduces the environmental footprint as less virgin resource needs to be produced.

The sheet obtained by the method according to the invention may be used to manufacture packaging material, wherein the packaging material is robust. Said packaging material may comprise a sheet obtained with the method according to the invention and connection means, wherein the connection means may be glue, bolts, pin hole connection, and the like.

In a preferred embodiment according to the invention, the method for manufacturing a circular sheet obviates the step of providing glue. Therefore, the manufactured circular sheet does not comprise additional glue, preferably the circular sheet does not comprise glue.

Manufacturing the circular sheet which does not comprise glue has the advantage that stickiness of the circular sheet is prevented. Therefore, clinging and/or incorporating of undesired particles during and/or after the method according to the invention to the circular sheet are reduced.

Another advantage is that, due to obviating the use of glue, the environmental impact of the sheet is reduced even further.

In a preferred embodiment according to the invention, the flakes of circular waste material further comprises a calcium salt and/or the step of adding calcium salt. Preferably, the calcium salt is one or more selected from the group of: calcium carbonate, calcium bicarbonate, wherein the calcium salt is present in a range of 15 wt.% to 25 wt.%, preferably wherein the calcium salt is present in a range of 17 wt.% to 23 wt.%, more preferably wherein the calcium salt is present in a range of 19 wt.% to 21 wt.%.

It was found that a circular sheet comprising calcium salt in the range of 15 wt.% to 25 wt.% provides a sheet which is stable and wherein the flakes form the desired sheet.

An advantage of the calcium salt, wherein the calcium salt is preferably selected from the group of calcium carbonate and calcium bicarbonate, is that said salt provides stability to the circular sheet.

A further advantage of the calcium salt is that ink and/or pigment may stick more efficient and effective to the manufactured circular sheet. As a result the printing of the manufactured circular sheet is enhanced.

Another advantage of the calcium salt is that calcium salt, such as calcium carbonate and calcium bicarbonate, has fire retardant properties. Therefore, the manufactured circular sheet slows the fire down in the event of a fire.

In a preferred embodiment according to the invention, compressing the flakes of waste material is performed with a volcanic press.

In a preferred embodiment according to the invention, the method further comprises the step of shredding a sheet comprising polyvinyl chloride, polyester, plasticiser, and stabiliser, to provide flakes of circular waste material, wherein the sheet is obtained from one or more of:
- a banner production process and/or from recycled banners;
- mesh cloth; and
- wall covering and/or wall paper.

Experiments showed that shredding the waste material/sheet resulted in an efficient and effective circular sheet.

In other words, the circular waste material is obtained from one or more of a banner production process and/or from recycled banners, mesh cloth, and wall covering and/or wall paper.

Obtaining circular waste material from one or more of a banner production process and/or from recycled banners, mesh cloth, and wall covering and/or wall paper has the advantage that a continuous waste stream is provided and environmental damage including (air) pollution due to for example combustion is reduced.

Furthermore, the left-overs and waste material from a banner production process may be up to 10% of the original sheet. An advantage of the circular sheet according to the invention is that the amount of waste of a banner production process and/or from recycled banners is reduced and is substantially zero. Therefore, the environmental or carbon footprint of banners comprising polyvinyl chloride and polyester is significantly reduced.

The ratio between the circular waste material is dependent on the availability of the circular waste materials.

In an embodiment according to the invention, the step of shredding comprises a plurality of subsequent shredding steps, wherein each shredding step reduces the size of the flakes compared to the preceding shredding step.

By providing a plurality of shredding steps, the size of the flakes can be reduced further with each subsequent shredding step, while the quality of the material can be maintained. This is mainly due to the fact that a coherent size of flakes is obtained by using several steps rather than a single step.

In an embodiment according to the invention, the step of shredding comprises a number of subsequent shredding steps, wherein the number is in the range of 2 to 8, preferably in the range of 2 to 6, and more preferably in the range of 2 to 4. Most preferably, the number is 3.

It has been found that providing 2 to 4 shredding steps, and most preferably 3 steps, provides a good flake size for compressing and heating according to the invention.

In a preferred embodiment according to the invention, the step of compressing the flakes of circular waste material includes the step of calendering.

Experiments showed that calendaring formed an efficient and effective circular sheet.

In a preferred embodiment according to the invention, the step of compressing the flakes of circular waste material comprises compressing the flakes under a pressure of at least 3 bar, preferably compressing the flakes of circular waste material under a pressure of at least 10 bar, more preferably compressing the flakes of circular waste material under a pressure of at least 30 bar. Preferably, the step of compressing the flakes of circular waste material comprises compressing the flakes under a pressure of at least 100 bar.

In a preferred embodiment according to the invention, the step of compressing the flakes of circular waste material comprises compressing the flakes under a temperature in the range of 80 °C to 200 °C, preferably compressing the flakes of circular waste material under a temperature in the range of 100 °C to 180 °C, more preferably compressing the flakes of circular waste material pressed under a temperature in the range of 120 °C to 160 °C.

In a preferred embodiment according to the invention, the step of compressing the flakes of circular waste material comprises compressing the flakes between 40 seconds and 200 seconds, preferably compressing the flakes of circular waste material between 60 seconds and 180 seconds, more preferably compressing the flakes of circular waste material between 80 seconds and 160 seconds. Preferably, the pressing of the flakes takes place under a combination of the above mentioned time period, pressure and/or temperature.

In a preferred embodiment according to the invention, the method comprises the step of washing and/or cleaning the flakes of circular waste material, and/or sheet, to remove dirt and/or ink.

Washing and/or cleaning the flakes and/or sheet reduces the amount of dirt and/or ink in the circular sheet/obtained product. As a result, ink provided to the circular sheet may attach more efficient and effective.

In a preferred embodiment according to the invention, the plasticiser may be one or more selected from the group of: bis(2-ethylhexyl) phthalate, butyl benzyl phthalate, diisonyl phthalate, diisodecyl phthalate, diisooctyl phthalate, diiosobutyl phthalate. Preferably wherein the stabiliser may be one or more selected from the group of: 2-hydroxy-4-(octyloxy)benzophenone, 2,4-dihydroxybenzophenone, 4-dodecyloxy-2-hydroxybenzophenone, 2-hydroxy-4-methoxybenzophenone.

It will be understood that 2-hydroxy-4-(octyloxy)benzophenone also refers to 2-hydroxy-4-n-octoxy-benzophenone, 2,4-dihydroxybenzophenone also refers to as 2,4-dihydroxy diphenyl ketone, 4-dodecyloxy-2-hydroxybenzophenone also refers to as 4-dodecyloxy-2-hydroxy diphenyl ketone, and 2-hydroxy-4-methoxybenzophenone also refers to as 2-hydroxy-4-methoxy diphenyl ketone.

Experiments showed that wherein the plasticiser is one or more selected from the group of: bis(2-ethylhexyl) phthalate, butyl benzyl phthalate, diisonyl phthalate, diisodecyl phthalate, diisooctyl phthalate, diiosobutyl phthalate, good flexibility is achieved. Furthermore, said plasticiser enabled the manufactured circular sheet to achieve the desired flexibility and to be configured in the desired shape.

In a further experiment it was shown that diisonyl phthalate provided good flexibility to the circular sheet.

Further experiments showed that wherein the stabiliser is one or more selected from the group of: 2-hydroxy-4-(octyloxy)benzophenone, 2,4-dihydroxybenzophenone, 4-dodecyloxy-2-hydroxybenzophenone, 2-hydroxy-4-methoxybenzophenone, a stable circular sheet was obtained. In particular, the stabiliser showed reduced the breakdown of polyvinyl chloride and polyeester.

In a preferred embodiment according to the invention, the flakes of circular waste material may further comprise a crosslinking agent and/or the method comprises the step of adding a crosslinking agent.

The crosslinking agent and/or flakes comprising the crosslinking agent have an advantage that the polyvinyl chloride and polyester are crosslinked and provide strength to the circular sheet.

In a preferred embodiment according to the invention, wherein the crosslinking agent may be one or more selected from the group of: 2-dibutylamino-4,6-dimercapto-1,3,5-triazine, dicumyl peroxide, di-*tert*-butyl peroxide.

It will be understood that the crosslinking agent is by no means limited to one or more selected from the group of: 2-dibutylamino-4,6-dimercapto-1,3,5-triazine, dicumyl peroxide, di-tert-butyl peroxide. Other crosslinking agents may be used depending on the availability, price, and/or suitability.

An advantage of the above mentioned crosslinking agent is that they are very suitable.

The crosslinking agent and/or flakes comprising the crosslinking agent have an advantage that the polyvinyl chloride and polyester are crosslinked and provide strength to the circular sheet.

In a preferred embodiment according to the invention, the method further comprises the step of providing one or more compounds selected from the group of: acrylate, paper, cardboard, polypropylene, polyethylene, cotton.

The step of providing the circular sheet with one or more compounds selected from the group of: acrylate, paper, cardboard, polypropylene, polyethylene, cotton may be before the step of compressing the flakes and/or after the step of heating.

In an embodiment according to the invention, the method may comprise the step of printing a layer of ink, preferably UV-ink or latex- ink, on the circular sheet.

An advantage of providing an ink layer is that it can be recycled together with the circular sheet.

An advantage of providing UV-ink or latex-ink is that these types of ink remain flexible after drying and are thus less susceptible to breaking or creasing. This increases the durability of the manufactured product.

In an embodiment according to the invention, the method comprises manufacturing a circular sheet with a length and/or width, wherein the length may be in the range of 0.5 to 3.0 meters, more preferably in the range of 1.2 to 2.5 meters, and/or wherein the width may be in the range of 0.5 to 2.0 meters, more preferably in the range of 0.7 to 1.3 meters.

In an embodiment according to the invention, the step of providing flakes of circular waste material comprises providing flakes of circular waste material from different sources of circular waste material, wherein the waste material from the different sources may for example be selected based on one or more of: colour, age, number of times of recycling, geographical location and/or use.

An advantage of providing flakes of waste material from different sources is that it allows a more even blend of flakes, such as for example a more homogenous colour. This reduces the amount of ink required to provide a colour on the circular sheet after manufacturing.

Another advantage of this embodiment is that the waste material may be used to reduce aging effects in the material and/or compensate for use-related detoriation effects. In general, the flakes of waste material can be recycled indefinitely to new material, thus providing a circular sheet. In some cases, the flakes of waste material are obtained from material that was exposed to circumstances that reduced the quality of the material. To compensate for such detoriation, such flakes are mixed with flakes from other sources, which the reduced quality to be offset by the higher quality of the flakes from other sources.

The invention also relates to a circular sheet comprising polyvinyl chloride, polyester, plasticiser, and stabiliser.

The sheet according to the invention has similar effects and advantages as the abovementioned method according to the invention. The embodiments as disclosed in relation to the method according to the invention can also be applied and/or used in relation to the sheet according to the invention.

An advantage of the sheet according to the invention is that it is circular. More specifically, the sheet according to the invention can be recycled substantially indefinitely. As a result, the sheet according to the invention can advantageously be used for short-term solutions, after which the sheet is recycled using the method according to the invention. Short-term solutions are for example floor boards for festivals or events, billboards, banners or other promotion material.

Another advantage of the sheet (and also the method) according to the invention is that it allows a deposit system in which the deposit is returned when the circular sheet is handed for recycling in after use.

Yet another advantage of the circular sheet, as well as the method, according to the invention, is that the circular sheet can provided with a ink layer, which preferably does not need to be removed after use.

In an embodiment of the circular sheet according to the invention, the circular sheet may comprise a layer of ink, preferably UV-ink.

In an embodiment of the circular sheet, the circular sheet may comprise one or more compounds selected from the group of: acrylate, paper, cardboard, polypropylene, polyethylene, cotton, enables to combine the features of one ore more of acrylate, paper, cardboard, polypropylene, polyethylene, and/or cotton in the circular sheet. For example, a circular sheet comprising paper has a more specific paper look and feel than a circular sheet comprising cotton. Therefore, each of the said compounds provides a different look and feel, as well as different characteristics to the circular sheet. This results in a wide variety and flexibility with regard to look, feel, and characteristics for the circular sheet according to the invention.

In a preferred embodiment according to the invention, the circular sheet is flexible, wherein the circular sheet comprises a thickness between 0.25 mm and 15 mm, preferably comprises a thickness between 1 mm and 10 mm, more preferably comprises a thickness between 3 mm and 5 mm.

Providing a circular sheet which is flexible has an advantage that said circular sheet is easier to store and transported. The mentioned thickness allows the circular sheet to be stable, rigid, and flexible.

Experiments showed that a circular sheet comprising a thickness between 0.25 mm and 15 mm, preferably comprises a thickness between 1 mm and 10 mm, more preferably comprises a thickness between 3 mm and 5 mm provided good results.

In a preferred embodiment according to the invention, the flakes of circular waste material have a main surface in the range of 0.1 cm² to 10 cm², preferably have a main surface in the range of 0.1 cm² to 7 cm², more preferably have a main surface in the range of 0.5 cm² to 4 cm².

The flakes used to manufacture the circular sheet according to the invention comprise different dimensions. Preferably, the dimensions of the flakes are substantially equal. The dimensions of the flakes are defined by the different surfaces of the flake. The main surface refers to either the top or bottom surface of the flake, wherein the top or bottom surface are opposite of each other and are the largest surfaces of the flake.

In a preferred embodiment, the flakes comprise fibres with a length of 1 cm to 8 cm, preferably 2 cm to 7 cm, more preferably 3 cm to 5 cm.

Experiments showed that flakes comprising fibres with a length of 1 cm to 8 cm, preferably 2 cm to 7 cm, more preferably 3 cm to 5 cm provided a circular sheet comprising high strength and high tear resistance.

In a preferred embodiment, the flakes of circular waste material are connected to each other by cross-linking and/or melting.

Experiments showed that cross-linking and/or melting the flakes provided a good circular sheet. Furthermore, connecting the flakes by cross-linking and/or melting is an efficient and effective process to manufacture the circular sheet according to the invention, which reduces cost.

In a preferred embodiment, the flakes of circular waste material are pressed under a pressure of at least 3 bar, preferably the flakes of waste material are pressed under a pressure of at least 10 bar, more preferably the flakes of waste material are pressed under a pressure of at least 30 bar. Preferably, the flakes of circular waste material are pressed under a pressure of at least 100 bar.

Experiments showed that pressing the flakes of circular waste material under a pressure of at least 3 bar, preferably under a pressure of at least 10 bar, more preferably under a pressure of at least 30 bar, provides the circular sheet according to the invention in an effective and efficient manner. In a preferred embodiment, the circular sheet, during manufacturing may be both heated, preferably melted, and pressed.

Further experiments showed that pressing the flakes of circular waste material under a pressure of at least 100 bar, provides the circular sheet material according to the invention in an effective and efficient manner.

In a preferred embodiment according to the invention, the tear resistance of the manufactured circular sheet according to the invention is in the range of 5 N to 500 N. The tear resistance was measured by one or more of the ASTM International measuring methods:
- D1004-13 Standard Test Method for Tear Resistance (Graves Tear) of Plastic Film and Sheeting;
- D1922-15 Standard Test Method for Propagation Tear Resistance of Plastic Film and Thin Sheeting by Pendulum Method; and
- D1938-14 Standard Test Method for Tear-Propagation Resistance (Trouser Tear) of Plastic Film and Thin Sheeting by a Single-Tear Method.

In a preferred embodiment according to the invention, the method for manufacturing the circular sheet further comprises the step of providing a coating to the circular sheet, wherein the coating is an anti-bacterial coating and/or an antiviral coating and/or an anti-UV coating.

Providing a coating to the circular sheet reduces and/or prevents bacterial growth and/or inhibit the development of viruses and/or prevents degradation of the circular sheet due to UV-light. An advantage of a circular sheet comprising said coating is that the lifetime is increased. As a result, the customer may profit of a prolonged life-time, fewer materials are consumed, and said sheet may be used in a high care environment. A high care environment is for example a hospital, nursery, dentistry, general practice, and the like.

The invention also relates to a sheet comprising:
- a circular sheet according to the invention; and
- a frame to which the circular sheet is connected.

The sheet provides the same effects and advantages as those described for the circular sheet and/or banner.

In a preferred embodiment according to the invention, the screen is a fluid dispersal protection screen.

An advantage of the sheet according to the invention is that the sheet is impermeable for aqueous fluids, such as blood, saliva, urine, faeces, sweat, and the like. The sheet according to the invention may therefore be used as (temporary) protection screen to prevent contamination of people and/or spaces.

The invention also relates to a method for displaying a picture/images and/or text, comprising the steps of:
- printing the picture/image and/or text on a circular sheet manufactured according to the method for manufacturing a circular sheet according to the invention; and
- providing the printed circular sheet to a suitable display means.

The method for displaying a picture/images and/or text provides the same effects and advantages as those described for the method for manufacturing a circular sheet and/or screen.

The method can be used for a screen according to the invention, yet may also be used for displaying on a wall/ as wall covering, provided to a suitable frame.

Further advantages, features and details of the invention are elucidated on the basis of preferred embodiments thereof, wherein reference is made to the accompanying drawings, in which:
- Figure 1 shows an example of compressed flakes according to the method of the invention;
- Figure 2 shows an example of a single flake according to the method of the invention;
- Figure 3 shows an example of an embodiment of the screen according to the present invention;
- Figure 4 shows a schematic overview of an example of the method for manufacturing a circular sheet according to the present invention; and
- Figure 5 shows a schematic overview of an example of the method for displaying a picture/images and/or text.

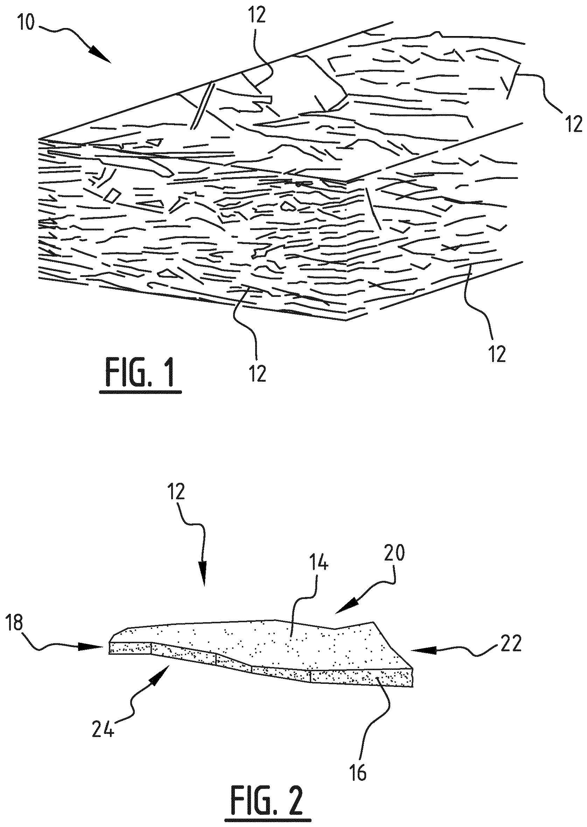

The plurality of compressed flakes 10 (Figure 1) comprises a collection of individual flakes 12 which are compressed to form a coherent mass. In this example, flakes 12 comprise substantially the same dimensions and extend in a substantially horizontal direction.

Single flake 12 (Figure 2) comprises sides 14, 16 as well as sides 18, 20, 22 and 24 (all not shown). Side 14 and side 24 (not shown) are considered to be the main surfaces. In other words, each flake preferably comprises two main surfaces, side 14 and side 24 (not shown), and, in this example, a number of small side surfaces 16, 18, 20, 22. It should be noted that each individual flake 12 may also have a different shape, such as a circle, a hexagon, or an irregular polygonal shape, which means having two main surfaces and more or less sides surfaces.

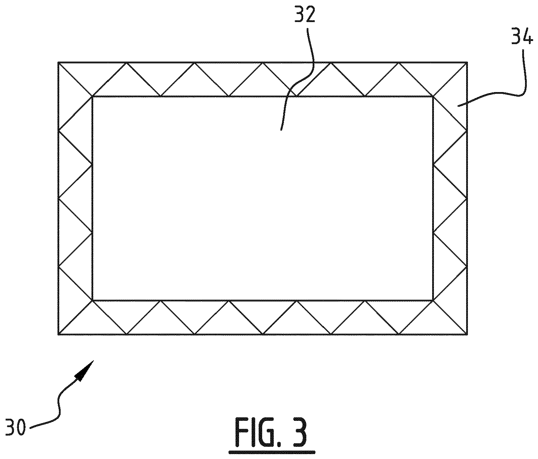

Screen 30 (Figure 3) shows an illustrated example of the present invention comprising a screen 32 manufactured from circular flakes and display means 34. The display means may be a frame, standard, means to hang up screen 30.

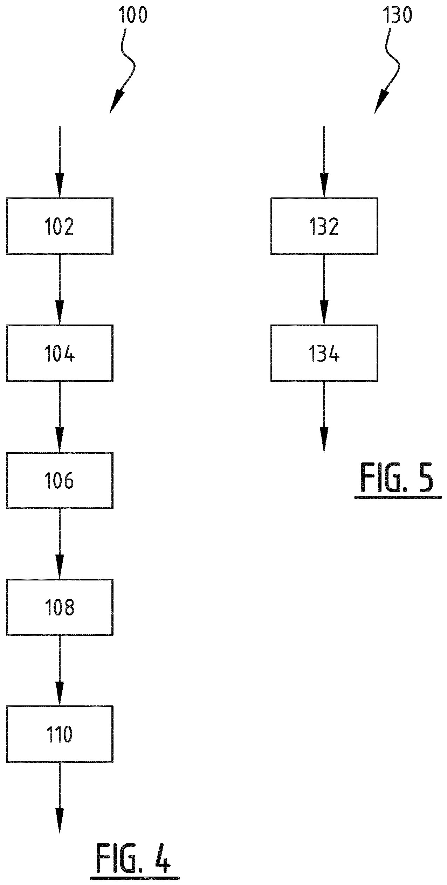

Method 100 (Figure 4) for manufacturing a circular sheet according to the present invention follows a sequence of different steps.

In the illustrated example method 100 may start with step 102 of shredding a sheet comprising polyvinyl chloride and polyester to provide flakes 12 of circular waste material. Method 100 may further include step 104 of washing the flakes of circular waste material, and/or sheet, to remove dirt and/or ink.

It will be understood that step 104 of washing the flakes of circular waste material, and/or sheet may be performed before or after step 102 of shredding a sheet.

Step 102 of shredding a sheet is followed by step 106 of providing flakes of circular waste material comprising polyvinyl chloride and polyester to a press. The flakes are pressed in step 108 of compressing the flakes of waste material. During step 108 of compressing, step 110 of heating the flakes of waste material is performed.

Method 130 (Figure 5) for displaying a picture/images and/or text according to the present invention follows a sequence of the following steps.

In the illustrated example method 130 may start with step 132 of printing the picture/image and/or text on a circular sheet according to the invention. Step 132 of printing the picture/image and/or text is followed by step 134 of providing the printed circular sheet to a suitable display means.

Experiments show that the tear resistance of the circular sheet according to the invention is in the range of 5 N to 500 N. The tear resistance was measured by the ASTM International measuring methods:
- D1004-13 Standard Test Method for Tear Resistance (Graves Tear) of Plastic Film and Sheeting;
- D1922-15 Standard Test Method for Propagation Tear Resistance of Plastic Film and Thin Sheeting by Pendulum Method; and
- D1938-14 Standard Test Method for Tear-Propagation Resistance (Trouser Tear) of Plastic Film and Thin Sheeting by a Single-Tear Method.

The circular sheet for this experiment had the dimensions of 20 mm x 100 mm x 5 mm both ends wear teared apart with a speed of 300 mm min⁻¹. The tear resistance was about 470 N and was measured according to the D1004-13 Standard Test Method for Tear Resistance.

The present invention is by no means limited to the above described preferred embodiments and/or experiments thereof. The rights sought are defined by the following claims within the scope of which many modifications can be envisaged.

## Claims

1. Method for manufacturing a circular sheet, comprising the steps of:
- providing flakes of circular waste material comprising polyvinyl chloride, polyester, plasticiser, and stabiliser to a press;
- compressing the flakes of waste material; and
- during compressing, heating the flakes of waste material.

2. Method for manufacturing a circular sheet according to claim 1, wherein the flakes of circular waste material further comprises a calcium salt and/or further comprising the step of adding calcium salt.

3. Method for manufacturing a circular sheet according to claim 2, wherein the calcium salt is one or more selected from the group of: calcium carbonate, calcium bicarbonate,
wherein the calcium salt is present in a range of 15 wt.% to 25 wt.%, preferably wherein the calcium salt is present in a range of 17 wt.% to 23 wt.%, more preferably wherein the calcium salt is present in a range of 19 wt.% to 21 wt.%.

4. Method according to any one of the preceding claims, further comprising the step of shredding a sheet comprising polyvinyl chloride, polyester, plasticiser, and stabiliser, to provide flakes of circular waste material, wherein the sheet is obtained from one or more of:
- a banner production process and/or from recycled banners;
- mesh cloth; and
- wall covering and/or wall paper.

5. Method for manufacturing a circular sheet according to any one of the preceding claims, wherein the step of compressing the flakes of circular waste material includes the step of calendaring and/or the step of compressing comprises compressing the flakes of circular waste material under a pressure of at least 3 bar, preferably compressing the flakes of circular waste material under a pressure of at least 10 bar, more preferably compressing the flakes of circular waste material under a pressure of at least 30 bar.

6. Method for manufacturing a circular sheet according to any one of the preceding claims,
wherein the step of compressing the flakes of circular waste material comprises compressing the flakes of circular material under a pressure of at least 100 bar and/or
wherein the step of compressing comprises compressing the flakes of circular waste material under a temperature in the range of 80 °C to 200 °C, preferably compressing the flakes of circular waste material under a temperature in the range of 100 °C to 180 °C, more preferably compressing the flakes of circular waste material under a temperature in the range of 120 °C to 160 °C and/or
wherein the step of compressing comprises compressing the flakes of circular waste material between 40 seconds and 200 seconds, preferably compressing the flakes of circular waste material between 60 seconds and 180 seconds, more preferably compressing the flakes of circular waste material between 80 seconds and 160 seconds.

7. Method for manufacturing a circular sheet according to any one of the preceding claims, further comprising the step of washing and/or cleaning the flakes of circular waste material, and/or sheet of waste material, to remove dirt and/or ink.

8. Method for manufacturing a circular sheet according to any one of the preceding claims, wherein the plasticiser is one or more selected from the group of: bis(2-ethylhexyl) phthalate, butyl benzyl phthalate, diisonyl phthalate, diisodecyl phthalate, diisooctyl phthalate, diiosobutyl phthalate and/or wherein the stabiliser is one or more selected from the group of: 2-hydroxy-4-(octyloxy)benzophenone, 2,4-dihydroxybenzophenone, 4-dodecyloxy-2-hydroxybenzophenone, 2-hydroxy-4-methoxybenzophenone.

9. Method for manufacturing a circular sheet according to any one of the preceding claims, wherein the flakes of circular waste material further comprise a crosslinking agent and/or wherein the method comprises the step of adding a crosslinking agent, preferably wherein the crosslinking agent is one or more selected from the group of: 2-dibutylamino-4,6-dimercapto-1,3,5-triazine, dicumyl peroxide, di-*tert*-butyl peroxide.

10. Method for manufacturing a circular sheet according to any one of the preceding claims, further comprising the step of providing one or more compounds selected from the group of: acrylate, paper, cardboard, polypropylene, polyethylene, cotton to the circular sheet.

11. Method for manufacturing a circular sheet according to any one of the preceding claims, wherein the circular sheet is flexible, wherein the circular sheet comprises a thickness between 0.25 mm and 15 mm, preferably comprises a thickness between 1 mm and 10 mm, more preferably comprises a thickness between 3 mm and 5 mm, and/or wherein the flakes of circular waste material have a main surface in the range of 0.1 cm² to 10 cm², preferably have a main surface in the range of 0.1 cm² to 7 cm², more preferably have a main surface in the range of 0.5 cm² to 4 cm².

12. Method for manufacturing a circular sheet according to any one of the preceding claims, further comprising the step of coating to circular sheet, wherein the coating is an anti-bacterial coating and/or an antiviral coating and/or an anti-UV coating.

13. Screen comprising:
- a circular sheet manufactured according to the method of any one of the claims 1 to 12; and
- a frame to which the circular sheet is connected.

14. Screen according to claim 13, wherein the screen is a fluid dispersal protection screen.

15. Method for displaying a picture/images and/or text, comprising the steps of:
- printing the picture/image and/or text on a circular sheet manufactured according to the method of any one of the claims 1 to 12; and
- providing the printed circular sheet to a suitable display means.
